# EUROPÄISCHE PATENTSCHRIFT

(11) **EP 3 090 898 B1**
(45) Veröffentlichungstag und Bekanntmachung des Hinweises auf die Patenterteilung: **28.08.2019**
(21) Anmeldenummer: 15166387.9
(22) Anmeldetag: 05.05.2015
(51) Int. Cl.: B60P 3/073, A01D 75/00, B60P 7/08

(54) **VERRIEGELUNGSVORRICHTUNG**
LOCKING DEVICE
DISPOSITIF DE VERROUILLAGE

(43) Veröffentlichungstag der Anmeldung: 09.11.2016
(73) Patentinhaber: Zürn Harvesting GmbH & Co. KG, 74214 Schöntal-Westernhausen (DE)
(72) Erfinder: Stahl, Martin, 74238 Krautheim-Oberndorf (DE); Müller, Matthias, 74360 Ilsfeld (DE)
(74) Vertreter: Manitz Finsterwald Patent- und Rechtsanwaltspartnerschaft mbB

(56) Entgegenhaltungen:
- US-A- 4 385 483
- US-A- 5 749 685
- US-B1- 8 348 561

## Beschreibung

Die vorliegende Erfindung betrifft eine Verriegelungsvorrichtung zum Verriegeln eines auf einem Transportfahrzeug zu transportierenden Schneidwerks für eine Erntemaschine gegenüber einem Tragrahmen des Transportfahrzeugs, mit einem beispielsweise schneidwerkseitigen Kupplungsabschnitt und einer beispielsweise fahrzeugseitigen Aufnahme für den Kupplungsabschnitt, welche miteinander in einen verriegelnden Eingriff bringbar sind. Die US 4 385 483 A offenbart eine solche Verriegelungsvorrichtung.

Schneidwerke für Mähdrescher, Feldhäcksler und dergleichen sind im Allgemeinen als Vorsatzschneidwerke ausgeführt und weisen eine für den Straßenverkehr unzulässig große Breite auf. Zum Transport von Schneidwerken abseits eines Feldes sind daher spezielle Transportfahrzeuge erforderlich. Beispielsweise werden so genannte "Schneidwerkswagen" zum Transport von Schneidwerken verwendet. Bei einem Schneidwerkswagen handelt es sich um einen Anhänger, auf welchem ein Schneidwerk in Längsausrichtung unterzubringen ist und welcher beispielsweise von der zugehörigen Erntemaschine selbst gezogen werden kann. Der Tragrahmen eines solchen Transportfahrzeugs kann je nach Anwendung unterschiedliche Stützelemente, Auflagen und dergleichen in verschiedener Anzahl umfassen. Demgemäß soll der Begriff "Tragrahmen" nicht auf eine einfache geschlossene Rahmenkonstruktion beschränkt sein.

Eine Verriegelungsvorrichtung der eingangs genannten Art sorgt bei einem Schneidwerkswagen oder einem ähnlichen Transportfahrzeug dafür, dass das zu transportierende Schneidwerk während des Transports nicht verrutscht, verkippt oder gar herabfällt. Zu diesem Zweck können der Kupplungsabschnitt und die Aufnahme mit jeweiligen Durchgangslöchern versehen sein, durch welche nach miteinander fluchtender Ausrichtung ein separates Steckelement seitlich hindurchgesteckt wird. Dieses Hindurchstecken kann sich in der Praxis als schwierig oder lästig erweisen. Außerdem kann das separate Steckelement leicht abhandenkommen.

Die US 8 348 561 B1 offenbart eine Vorrichtung zum Befestigen eines Motorrads auf einem Transportanhänger, welche einen am Rahmen des Motorrads zu befestigenden Stab und zwei am Anhänger vorgesehene Halterungen für die Enden des Stabs aufweist. Die Halterungen umfassen jeweils eine Auflage und einen Schwenkhebel zum Umgreifen des Stabs.

Es ist eine Aufgabe der Erfindung, eine zuverlässige und leicht bedienbare Verriegelungsvorrichtung für Schneidwerk-Transportfahrzeuge anzugeben.

Die Lösung der Aufgabe erfolgt durch eine Verriegelungsvorrichtung mit den Merkmalen des Anspruchs 1.

Die Erfindung sieht vor, dass der Kupplungsabschnitt eine Basis, einen sich von der Basis erstreckenden Schaft und einen gegenüber dem Schaft auskragenden Kopf aufweist, und dass die Aufnahme eine Anschlagfläche für die Basis des Kupplungsabschnitts und eine Öffnung zum Durchführen zumindest des Kopfes des Kupplungsabschnitts in einer Durchführrichtung aufweist, wobei an der Aufnahme ein Riegelelement vorgesehen ist, welches zwischen einer Freigabestellung und einer Riegelstellung beweglich ist und dazu ausgebildet ist, in der Riegelstellung den durch die Öffnung hindurchgeführten Kopf des Kupplungsabschnitts zu hintergreifen.

Aufgrund des Hintergreifens des Kopfes durch das Riegelelement wird der Kupplungsabschnitt formschlüssig und dementsprechend zuverlässig in der Aufnahme gehalten. Wenn sich das Riegelelement hingegen in der Freigabestellung befindet, wird der durch die Öffnung hindurchgeführte Kopf des Kupplungsabschnitts nicht hintergriffen und der Kupplungsabschnitt kann entgegen der Durchführrichtung aus der Aufnahme herausgeführt werden. Je nach Stellung des Riegelelements ist das Schneidwerk also entweder formschlüssig am Tragrahmen gehalten oder von diesem gelöst und daher entnehmbar. Die an der Aufnahme vorgesehene Anschlagfläche für die Basis des Kupplungsabschnitts erleichtert den Verriegelungsvorgang insofern, als ein Benutzer nicht auf das Einhalten einer vorgegebenen Einführtiefe des Kupplungsabschnitts achten muss. Vielmehr ist ein Einführen des Kupplungsabschnitts in die Aufnahme über das durch den Anschlag vorgegebene Maß hinaus ausgeschlossen. Ein weiterer Vorteil der Erfindung besteht darin, dass zum Verriegeln keine verlierbaren Losteile erforderlich sind.

Das Riegelelement kann zwischen der Freigabestellung und der Riegelstellung verschwenkbar an einem Basisabschnitt der Aufnahme gelagert sein, vorzugsweise um eine parallel zu der Durchführrichtung verlaufende Schwenkachse. Dies ermöglicht eine besonders einfache und kompakte Konstruktion. Insbesondere sind hierbei keine aufwändigen Linearführungen notwendig. Eine spezielle Ausführungsform der Erfindung sieht vor, dass das Riegelelement hakenartig gestaltet ist oder einen hakenartigen Halteabschnitt aufweist. Anstelle einer schwenkbaren Lagerung könnte grundsätzlich auch eine verschiebbare Lagerung des Riegelelements an der Basis vorgesehen sein.

Gemäß einer Ausführungsform der Erfindung weist das Riegelelement eine längliche und an einem Längsende offene Aussparung auf, deren gegenüberliegende Begrenzungsränder den Kopf des Kupplungsabschnitts zweiseitig hintergreifen, wenn sich das Riegelelement in der Riegelstellung befindet. Vorzugsweise entspricht die Breite dieser Aussparung etwa der Dicke des Schaftes. Die Aussparung kann insbesondere als einseitig offener Schlitz ausgeführt sein, sodass sich eine gabelartige Grundform des Riegelelements ergibt. Im Falle eines verschwenkbaren Riegelelements ist es bevorzugt, dass die Aussparung gekrümmt verläuft. Das zweiseitige Hintergreifen sorgt für eine besonders zuverlässige Fixierung des Kupplungsabschnitts in der Aufnahme. Ein Riegelelement mit einem einseitig offenen Schlitz ist zudem einfach und kostengünstig herstellbar.

Das Riegelelement kann allgemein eine flächige Grundform aufweisen, also zum Beispiel plattenartig ausgebildet sein. Dies ist herstellungstechnisch besonders günstig. Insbesondere kann das flächige Riegelelement als gestanztes und/oder gelasertes Blechteil gefertigt sein. Eine zungenartige Erweiterung des flächigen Riegelelements kann hierbei einen Griffabschnitt zum Betätigen des Riegelelements bilden. Es sind dann keine aufwändigen separaten Betätigungselemente erforderlich.

Eine bevorzugte Ausgestaltung der Erfindung sieht vor, dass der Kopf des Kupplungsabschnitts zumindest im Wesentlichen kugelförmig ist. Ein solcher abgerundeter Kopf erleichtert das Bewegen des Riegelelements in Richtung der Riegelstellung und verhindert ein "Hängenbleiben" an Kanten oder Absätzen. Der Kugelkopf kann besonders leicht an Einführschrägen der Aufnahme entlanggleiten und so den Verriegelungsvorgang weiter vereinfachen.

Der Schaft des Kupplungsabschnitts kann zumindest im Wesentlichen zylindrisch sein, um eine einfache und kostengünstige Fertigung zu ermöglichen.

Gemäß einer weiteren Ausführungsform der Erfindung weist die Aufnahme zwei zueinander geneigte Anschlagflächen auf, welche für eine Anlage entsprechend zueinander geneigter Gegenflächen der Basis des Kupplungsabschnitts ausgebildet sind. Solche Anschlagflächen bilden Einführschrägen und erleichtern das korrekte Positionieren des Kupplungsabschnitts.

Insbesondere können die zueinander geneigten Anschlagflächen in Bezug auf die Durchführrichtung pfeilartig angeordnet sein, sodass sie eine Selbstzentrierung des Kupplungsabschnitts relativ zu der Aufnahme bewirken.

Gemäß einer speziellen Ausgestaltung der Erfindung ist das Riegelelement in der Freigabestellung und/oder in der Riegelstellung arretierbar, insbesondere mittels eines verstellbaren Arretierbolzens. Hierdurch wird ein unbeabsichtigtes Lösen der Verriegelung verhindert. Beispielsweise kann an der Aufnahme eine Ausnehmung vorgesehen sein, in welche ein am Riegelelement beweglich gelagerter Arretierbolzen einführbar ist. Vorzugsweise ist der Arretierbolzen durch Betätigung eines Sicherungselements wie eines Sicherungshebels verstellbar, insbesondere wobei das Sicherungselement zumindest in einer Sicherungsstellung festlegbar ist. Diese Ausgestaltung ermöglicht eine besonders zuverlässige Verriegelung eines Schneidwerks am Transportfahrzeug, da der Kupplungsabschnitt durch das Riegelelement sicherbar ist, das Riegelelement durch den Arretierbolzen sicherbar ist und der Arretierbolzen durch das festlegbare Sicherungselement sicherbar ist.

Bevorzugt ist der Kupplungsabschnitt oder die Aufnahme für eine lösbare Befestigung am Schneidwerk ausgebildet. Dies ermöglicht bei Bedarf ein Nachrüsten bestehender Schneidwerke mit entsprechenden Kupplungsabschnitten oder Aufnahmen. Außerdem kann bei einer solchen Ausgestaltung die schneidwerkseitige Verriegelungskomponente z. B. für Wartungs- und Reparaturzwecke abgenommen werden. Um eine lösbare Befestigung zu ermöglichen, können z. B. Haltelaschen oder Halteflansche mit entsprechenden Befestigungslöchern am Kupplungsabschnitt oder an der Aufnahme vorgesehen sein.

Vorzugsweise bildet der Kupplungsabschnitt eine schneidwerkseitige Verriegelungskomponente, während die Aufnahme eine fahrzeugseitige Verriegelungskomponente der erfindungsgemäßen Vorrichtung bildet. Grundsätzlich könnte jedoch auch der Kupplungsabschnitt zur Befestigung am Transportfahrzeug ausgebildet sein, während die Aufnahme zur Befestigung am Schneidwerk ausgebildet ist.

Eine weitere Ausführungsform der Erfindung sieht vor, dass an der Aufnahme eine Auflage für den Kupplungsabschnitt und/oder wenigstens einen weiteren Abschnitt des Schneidwerks angeordnet ist, insbesondere wobei die Auflage im montierten Zustand der Verriegelungsvorrichtung wenigstens bereichsweise gegenüber der Horizontalen geneigt ist. Eine solche Auflage dient zum Stützen und/oder Führen des Schneidwerks während des Verriegelungsvorgangs und erleichtert so das Einführen des Kupplungsabschnitts in die Aufnahme. Die Auflage kann insbesondere als einfache Stützplatte ausgeführt sein. Auf einem gegenüber der Horizontalen geneigten Abschnitt der Auflage kann das Schneidwerk während des Beladens des Transportfahrzeugs mit dem Schneidwerk bzw. während des Kupplungsvorgangs herabgleiten, bis der Kupplungsabschnitt in einen Eingriff mit der Aufnahme gelangt.

Es kann vorgesehen sein, dass die Basis des Kupplungsabschnitts eine zum Aufliegen auf der Auflage ausgebildete Gegenfläche aufweist. Insbesondere kann zur besseren Kraftverteilung ein vollflächiges Aufliegen der Gegenfläche auf der Auflage vorgesehen sein, indem die Gegenfläche komplementär zu der Auflage gestaltet ist.

Die Basis des Kupplungsabschnitts kann wenigstens ein Hohlprofil, insbesondere ein Rechteckrohr, umfassen. Das Gewicht des Kupplungsabschnitts kann durch Verwendung eines Hohlprofils gering gehalten werden, ohne dass die Stabilität übermäßig beeinträchtigt ist.

Die Erfindung betrifft auch ein Transportfahrzeug für Schneidwerke von Erntemaschinen mit einem Fahrwerk, einem Tragrahmen und einer Verriegelungsvorrichtung zum Verriegeln eines zu transportierenden Schneidwerks gegenüber dem Tragrahmen, wobei die Verriegelungsvorrichtung wie vorstehend beschrieben ausgebildet ist. Die Verriegelungsvorrichtung ermöglicht eine zuverlässige Sicherung des Schneidwerks auf dem Transportfahrzeug während jeglicher Transport- und Überführungsfahrten.

Vorzugsweise ist das Transportfahrzeug als Anhänger ausgebildet. Ein Anhänger kann z. B. von der zugehörigen Erntemaschine gezogen werden, sodass der Einsatz eines motorisierten Transportfahrzeugs im Allgemeinen nicht nötig ist.

Weiterbildungen der Erfindung sind auch den abhängigen Ansprüchen, der Beschreibung sowie den beigefügten Zeichnungen zu entnehmen.

Die Erfindung wird nachfolgend beispielhaft anhand der Zeichnungen beschrieben.
- Fig. 1: zeigt in Perspektivdarstellung einen Kupplungsabschnitt einer erfindungsgemäßen Verriegelungsvorrichtung zum Verriegeln eines auf einem Transportfahrzeug zu transportierenden Schneidwerks für eine Erntemaschine gegenüber einem Tragrahmen des Transportfahrzeugs.
- Fig. 2: zeigt den Kupplungsabschnitt gemäß Fig. 1 in einer seitlichen Schnittansicht.
- Fig. 3: ist eine Draufsicht auf den Kupplungsabschnitt gemäß Fig. 1.
- Fig. 4: zeigt in Perspektivdarstellung eine Aufnahme einer erfindungsgemäßen Verriegelungsvorrichtung, welche für ein Zusammenwirken mit dem in Fig. 1 gezeigten Kupplungsabschnitt vorgesehen ist.
- Fig. 5: ist eine Draufsicht auf die Aufnahme gemäß Fig. 4.
- Fig. 6: zeigt die Aufnahme gemäß Fig. 4 in einer Seitenansicht.
- Fig. 7: zeigt die Aufnahme gemäß Fig. 4 schräg von oben.
- Fig. 8: zeigt den Kupplungsabschnitt gemäß Fig. 1 und die Aufnahme gemäß Fig. 4 in einem verriegelnden Eingriff miteinander.

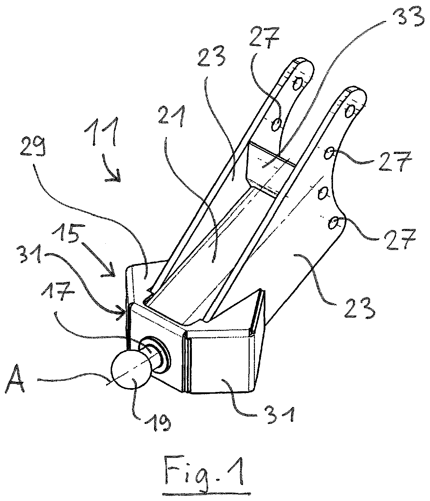

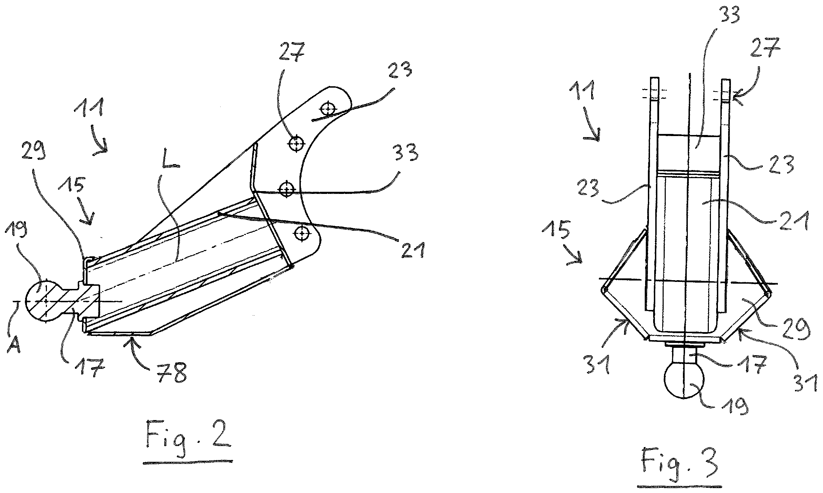

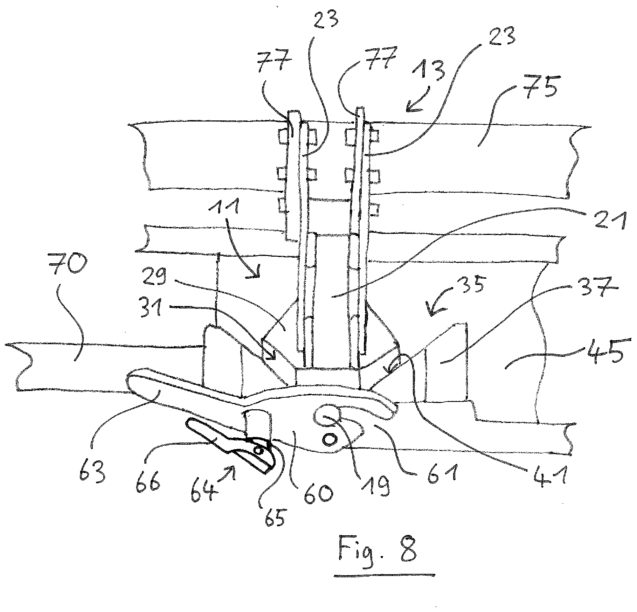

Der in Fig. 1-3 dargestellte Kupplungsabschnitt 11 bildet den schneidwerkseitigen Teil einer in Fig. 8 vollständig gezeigten Verriegelungsvorrichtung 13 zum Verriegeln eines Schneidwerks auf einem Transportfahrzeug. Der Kupplungsabschnitt 11 umfasst eine Basis 15, einen sich von der Basis 15 erstreckenden Hals oder Schaft 17 und einen gegenüber dem Schaft 17 auskragenden Kopf 19. Bei dem dargestellten Ausführungsbeispiel ist der Schaft 17 zylindrisch geformt, während es sich bei dem Kopf 19 um einen Kugelkopf handelt. Die Basis 15 umfasst ein Hohlprofil in Form eines länglichen Rechteckrohrs 21. An zwei entgegengesetzten Längsseiten des Rechteckrohrs 21 sind plattenartige Seitenstege 23 angebracht. Die vorzugsweise aus Blech gefertigten Seitenstege 23 weisen jeweils an ihrem dem Kopf 19 abgewandten Ende einen teilkreisförmig einwärts gewölbten Verlauf auf. Entlang des gewölbt verlaufenden Randes befinden sich mehrere Befestigungslöcher 27. An einem dem Kopf 19 zugewandten Ende des Rechteckrohrs 21 befindet sich ein Funktionsabschnitt 29, welcher den hier einstückig mit dem Schaft 17 ausgebildeten Kopf 19 trägt und zwei in Bezug auf eine Schaftachse A des Schaftes 17 geneigte Schrägflächen 31 aufweist. Die Schrägflächen 31 sind wie dargestellt pfeilartig zueinander geneigt. Das dem Kopf 19 abgewandte Ende des Rechteckrohrs 21 ist durch einen Versteifungsabschnitt 33 abgedeckt, welcher mit den Seitenstegen 23 verbunden ist. Der Funktionsabschnitt 29 und der Versteifungsabschnitt 33 können durch ein gemeinsames Kantblech oder durch mehrere miteinander verbundene Kantbleche gebildet sein. Wie in Fig. 2 zu erkennen ist, kreuzen sich die Längsachse L des Rechteckrohrs 21 und die Schaftachse A.

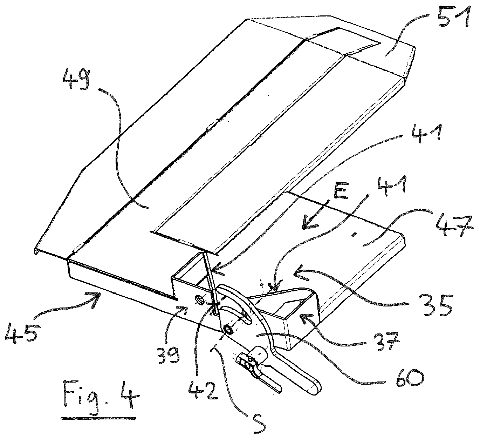

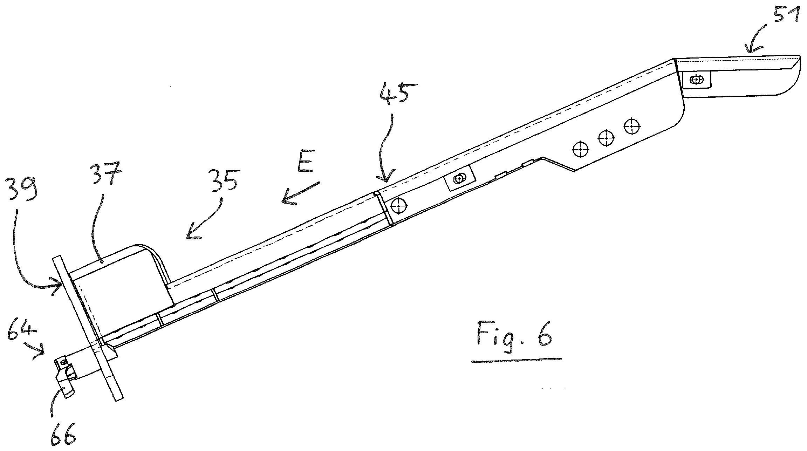

Die Fig. 4-7 zeigen eine Aufnahme 35 für den in Fig. 1-3 dargestellten Kupplungsabschnitt 11, die den fahrzeugseitigen Teil der in Fig. 8 gezeigten Verriegelungsvorrichtung 13 bildet. Die Aufnahme 35 umfasst einen Basisabschnitt 37, der eine ebene Stirnfläche 39 sowie zwei der Stirnfläche 39 abgewandte, pfeilartig zueinander geneigte Schrägflächen 41 definiert. Zwischen den beiden Schrägflächen 41 befindet sich ein Zwischenraum, der eine Öffnung 42 zum Durchführen des Kopfes 19 (Fig. 1) des Kupplungsabschnitts 11 in einer Durchführrichtung E bildet.

Die Aufnahme 35 befindet sich am Rand einer Stütz- und Führungsplatte 45, welche eine Auflage für das zu transportierende Schneidwerk bildet. Die Stütz- und Führungsplatte 45 weist einen ersten Plattenabschnitt 47 und einen gegenüber dem ersten Plattenabschnitt 47 verlängerten zweiten Plattenabschnitt 49 auf, welche eine gemeinsame Auflageebene definieren. An einem der Aufnahme 35 abgewandten Ende des zweiten Plattenabschnitts 49 befindet sich eine Erweiterung 51, welche gegenüber dem zweiten Plattenabschnitt 49 abgewinkelt ist. Der verlängerte zweite Plattenabschnitt 49 dient als Auflage für ein nicht dargestelltes Stützrohr gängiger Schneidwerke.

Die durch die Stütz- und Führungsplatte 45 sowie die Aufnahme 35 gebildete Einheit ist zum Anbringen am Tragrahmen eines Transportfahrzeugs wie eines Schneidwerkswagens ausgebildet, von welchem in Fig. 8 lediglich der Teil eines Längsträgers 70 gezeigt ist. Im montierten Zustand der Stütz- und Führungsplatte 45 ist die durch den ersten Plattenabschnitt 47 und den zweiten Plattenabschnitt 49 definierte Auflageebene gegenüber der Horizontalen geneigt, vorzugsweise um 15° bis 30° und besonders bevorzugt um 20° bis 25°. Die Anbringung der Aufnahme 35 am Tragrahmen kann über die Stütz- und Führungsplatte 45 erfolgen. Speziell kann die Stütz- und Führungsplatte 45 unterseitig an wenigstens zwei Lagerstellen mittels geeigneter Lagerböcke am Tragrahmen gelagert sein. Gemäß einer speziellen Ausgestaltung der Erfindung ist die Stütz- und Führungsplatte 45 an wenigstens einer Lagerstelle höhenverstellbar am Tragrahmen gelagert, beispielsweise mittels einer Gewindespindel, sodass der Neigungswinkel der Auflageebene bei Bedarf an die jeweilige Anwendung angepasst werden kann.

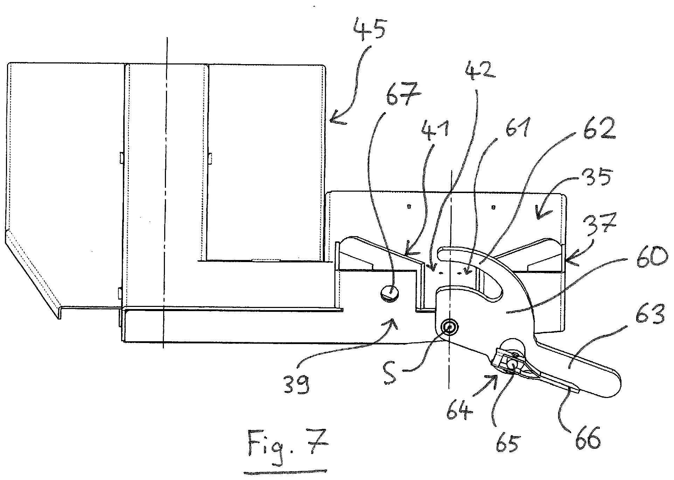

An der Stirnfläche 39 des Basisabschnitts 37 ist ein Riegelelement 60 derart gelenkig gelagert, dass es um eine Schwenkachse S zwischen einer Freigabestellung und einer Riegelstellung verschwenkbar ist. Die Schwenkachse S verläuft bei dem dargestellten Ausführungsbeispiel parallel zu der Durchführrichtung E. Das Riegelelement 60 weist eine plattenartige Form auf und ist bevorzugt als einfaches Stanz- oder Laserblech ausgeführt. Weiterhin weist das Riegelelement 60 eine gekrümmt verlaufende, einseitig offene Aussparung 61 (Fig. 7) auf. Diese Aussparung 61 ist zum geschlossenen Ende hin verjüngt. Der in Fig. 7 oberhalb der Aussparung 61 befindliche Abschnitt des Riegelelements 60 bildet einen Haken 62.

Eine schmale, zungenartige Erweiterung 63 des Riegelelements 60 ist derart geformt, dass sie von einem Bediener leicht ergriffen und als Betätigungshebel zum manuellen Verschwenken des Riegelelements 60 zwischen einer den Kopf 19 durch die Öffnung 42 hindurchlassenden Freigabestellung und der in Fig. 8 gezeigten, den Kopf 19 hintergreifenden Riegelstellung verwendet werden kann. Es ist darauf hinzuweisen, dass Fig. 8 im Gegensatz zu Fig. 4-7 eine Variante zeigt, bei welcher das Riegelelement 60 im Uhrzeigersinn anstatt gegen den Uhrzeigersinn zu schwenken ist, um es in die Riegelstellung zu bewegen.

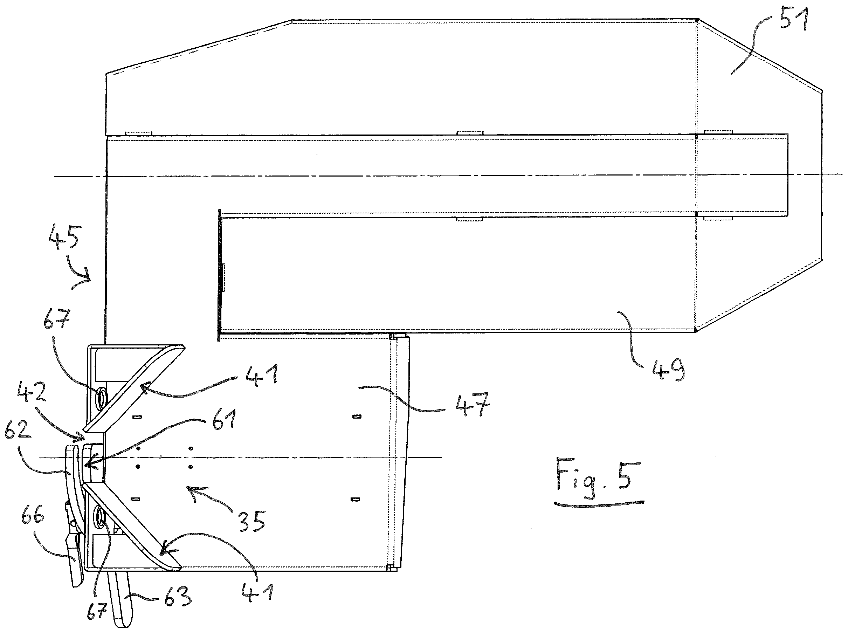

Zum bedarfsweisen Arretieren des Riegelelements 60 in der Riegelstellung ist eine Arretiervorrichtung 64 vorgesehen, die einen verschiebbar am Riegelelement 60 geführten Arretierbolzen 65 und einen Exzenterhebel 66 aufweist. Der Arretierbolzen 65 oder Indexbolzen kann in eine von zwei in der Stirnfläche 39 des Basisabschnitts 37 vorhandenen Ausnehmungen 67 eingeschoben werden, um so das Riegelelement 60 in der Riegelstellung am Basisabschnitt 37 festzulegen. Durch Betätigen des Exzenterhebels 66 kann der Arretierbolzen 65 wahlweise in die betreffende Ausnehmung 67 hinein und aus der Ausnehmung 67 heraus bewegt werden. Eine am Exzenterhebel 66 vorgesehene gekrümmte Fläche dient dazu, den Exzenterhebel 66 in der arretierenden Stellung festzuklemmen, wie dies grundsätzlich bekannt ist. In Fig. 5 ist erkennbar, dass die zwei Ausnehmungen 67 symmetrisch in Bezug auf die Öffnung 42 angeordnet sind. Somit kann das Riegelelement 60 sowohl linksschließend wie in Fig. 4 gezeigt als auch rechtsschlie-ßend wie in Fig. 8 gezeigt am Basisabschnitt 37 montiert werden, wobei je nach Montageart jeweils eine der Ausnehmungen 67 für einen Eingriff des Arretierbolzens 65 genutzt wird.

Das Verriegeln eines Schneidwerks am Tragrahmen eines Transportfahrzeugs wird nun unter Bezugnahme auf Fig. 8 erläutert. Es ist darauf hinzuweisen, dass an einem Transportfahrzeug vorzugsweise jeweils wenigstens zwei Verriegelungsvorrichtungen 13 pro Schneidwerk vorgesehen sind, um einen sicheren Halt zu gewährleisten und insbesondere ein unerwünschtes Verkippen des Schneidwerks zu vermeiden. Ferner ist es bevorzugt, die Verriegelungsvorrichtungen 13 derart zu positionieren, dass sie von der Fahrerkabine der Erntemaschine aus sichtbar und nicht etwa verdeckt sind. Wie in Fig. 8 zu erkennen ist, ist der Kupplungsabschnitt 11 unter Verwendung der Seitenstege 23 an einem Tragholm 75 des Schneidwerks angeschraubt. An dem Tragholm 75 sind hierfür entsprechende Befestigungslaschen 77 vorgesehen, beispielsweise angeschweißt.

Für einen Transport wird das Schneidwerk mittels der zugehörigen Erntemaschine an das Transportfahrzeug herangefahren und abgesenkt, bis entsprechende Bereiche des Schneidwerkbodens auf den Stütz- und Führungsplatten 45 aufsitzen. Hierbei gelangen auch an den jeweiligen Basen 15 der Kupplungsabschnitte 11 ausgebildete Gegenflächen 78 (Fig. 2) zum Aufliegen auf die Stütz- und Führungsplatten 45. Unter fortgesetztem Absenken des Schneidwerks gleitet dieses auf der schiefen Ebene der Stütz- und Führungsplatten 45 nach unten, wobei jeweils der Kopf 19 des Kupplungsabschnitts 11 in der Durchführrichtung E durch die Öffnung 42 der Aufnahme 35 geführt wird. Sollte der Kopf 19 nicht exakt auf die Öffnung 42 hin ausgerichtet sein, so gleitet er an einer der Schrägflächen 41 entlang und wird dabei automatisch zur Öffnung 42 hin bewegt. Die Kugelform des Kopfes 19 erleichtert diesen Gleitvorgang. Schließlich schlagen die Schrägflächen 31 des Kupplungsabschnitts 11 an den Schrägflächen 41 der Aufnahme 35 an, aufgrund der korrespondierenden Ausrichtung im Wesentlichen vollflächig. In diesem Zustand befindet sich der Schaft 17 gerade in der Öffnung 42.

Zum Verriegeln wird nun das Riegelelement 60 an der Erweiterung 63 ergriffen und in die Riegelstellung geschwenkt, wobei der Schaft 17 in die Aussparung 61 gelangt und der Kopf 19 demgemäß von den Begrenzungsrändern der Aussparung 61 hintergriffen wird. Dieser Zustand ist in Fig. 8 dargestellt. Schließlich wird das Riegelelement 60 durch Betätigen der Arretiervorrichtung 64 in der Riegelstellung fixiert.

Die Erfindung ermöglicht eine sichere, formschlüssige Verriegelung von Schneidwerken an Transportfahrzeugen wie Schneidwerkswagen, wobei das Verriegeln und Entriegeln einfach und intuitiv durchführbar ist.

### Bezugszeichenliste

- 11: Kupplungsabschnitt
- 13: Verriegelungsvorrichtung
- 15: Basis
- 17: Schaft
- 19: Kopf
- 21: Rechteckrohr
- 23: Seitensteg
- 27: Befestigungsloch
- 29: Funktionsabschnitt
- 31: Schrägfläche
- 33: Versteifungsabschnitt
- 35: Aufnahme
- 37: Basisabschnitt
- 39: Stirnfläche
- 41: Schrägfläche
- 42: Öffnung
- 45: Stütz- und Führungsplatte
- 47: erster Plattenabschnitt
- 49: zweiter Plattenabschnitt
- 51: Erweiterung
- 60: Riegelelement
- 61: Aussparung
- 62: Haken
- 63: Erweiterung
- 64: Arretiervorrichtung
- 65: Arretierbolzen
- 66: Exzenterhebel
- 67: Ausnehmung
- 70: Längsträger
- 75: Tragholm
- 77: Befestigungslasche
- 78: Gegenfläche

- A: Schaftachse
- L: Längsachse
- S: Schwenkachse
- E: Durchführrichtung

## Patentansprüche

1. Verriegelungsvorrichtung (13) zum Verriegeln eines auf einem Transportfahrzeug zu transportierenden Schneidwerks für eine Erntemaschine gegenüber einem Tragrahmen des Transportfahrzeugs, mit einem beispielsweise schneidwerkseitigen Kupplungsabschnitt (11) und einer beispielsweise fahrzeugseitigen Aufnahme (35) für den Kupplungsabschnitt (11), welche miteinander in einen verriegelnden Eingriff bringbar sind,
**dadurch gekennzeichnet, dass**
der Kupplungsabschnitt (11) eine Basis (15), einen sich von der Basis (15) erstreckenden Schaft (17) und einen gegenüber dem Schaft (17) auskragenden Kopf (19) aufweist, und dass
die Aufnahme (35) eine Anschlagfläche (31) für die Basis (15) des Kupplungsabschnitts (11) und eine Öffnung (42) zum Durchführen zumindest des Kopfes (19) des Kupplungsabschnitts (11) in einer Durchführrichtung (E) aufweist, wobei
an der Aufnahme (35) ein Riegelelement (60) vorgesehen ist, welches zwischen einer Freigabestellung und einer Riegelstellung beweglich ist und dazu ausgebildet ist, in der Riegelstellung den durch die Öffnung (42) hindurchgeführten Kopf (19) des Kupplungsabschnitts (11) zu hintergreifen.

2. Vorrichtung nach Anspruch 1,
**dadurch gekennzeichnet, dass**
das Riegelelement (60) zwischen der Freigabestellung und der Riegelstellung verschwenkbar an einem Basisabschnitt (37) der Aufnahme (35) gelagert ist, vorzugsweise um eine parallel zu der Durchführrichtung (E) verlaufende Schwenkachse (S).

3. Vorrichtung nach Anspruch 1 oder 2,
**dadurch gekennzeichnet, dass**
das Riegelelement (60) eine längliche und an einem Längsende offene Aussparung (61) aufweist, deren gegenüberliegende Begrenzungsränder den Kopf (19) des Kupplungsabschnitts (11) zweiseitig hintergreifen, wenn sich das Riegelelement (60) in der Riegelstellung befindet.

4. Vorrichtung nach einem der vorstehenden Ansprüche,
**dadurch gekennzeichnet, dass**
das Riegelelement (60) eine flächige Grundform aufweist, insbesondere wobei eine zungenartige Erweiterung (63) des flächigen Riegelelements (60) einen Griffabschnitt zum Betätigen des Riegelelements (60) bildet.

5. Vorrichtung nach einem der vorstehenden Ansprüche,
**dadurch gekennzeichnet, dass**
der Kopf (19) des Kupplungsabschnitts (11) zumindest im Wesentlichen kugelförmig ist.

6. Vorrichtung nach einem der vorstehenden Ansprüche,
**dadurch gekennzeichnet, dass**
der Schaft (17) des Kupplungsabschnitts (11) zumindest im Wesentlichen zylindrisch ist.

7. Vorrichtung nach einem der vorstehenden Ansprüche,
**dadurch gekennzeichnet, dass**
die Aufnahme (35) zwei zueinander geneigte Anschlagflächen (41) aufweist, welche für eine Anlage entsprechend zueinander geneigter Gegenflächen (31) der Basis (15) des Kupplungsabschnitts (11) ausgebildet sind, insbesondere wobei die zueinander geneigten Anschlagflächen (41) in Bezug auf die Durchführrichtung (E) pfeilartig angeordnet sind.

8. Vorrichtung nach einem der vorstehenden Ansprüche,
**dadurch gekennzeichnet, dass**
das Riegelelement (60) in der Freigabestellung und/oder in der Riegelstellung arretierbar ist, insbesondere mittels eines verstellbaren Arretierbolzens (65).

9. Vorrichtung nach einem der vorstehenden Ansprüche,
**dadurch gekennzeichnet, dass**
der Kupplungsabschnitt (11) oder die Aufnahme (35) für eine lösbare Befestigung am Schneidwerk ausgebildet ist.

10. Vorrichtung nach einem der vorstehenden Ansprüche,
**dadurch gekennzeichnet, dass**
der Kupplungsabschnitt (11) eine schneidwerkseitige Verriegelungskomponente und die Aufnahme (35) eine fahrzeugseitige Verriegelungskomponente der Vorrichtung bildet.

11. Vorrichtung nach einem der vorstehenden Ansprüche,
**dadurch gekennzeichnet, dass**
an der Aufnahme (35) eine Auflage (45) für den Kupplungsabschnitt (11) und/oder wenigstens einen weiteren Abschnitt des Schneidwerks angeordnet ist, insbesondere wobei die Auflage (45) im montierten Zustand der Verriegelungsvorrichtung (13) wenigstens bereichsweise gegenüber der Horizontalen geneigt ist.

12. Vorrichtung nach Anspruch 11,
**dadurch gekennzeichnet, dass**
die Basis (15) des Kupplungsabschnitts (11) eine zum Aufliegen auf der Auflage (45) ausgebildete Gegenfläche (78) aufweist.

13. Vorrichtung nach einem der vorstehenden Ansprüche,
**dadurch gekennzeichnet, dass**
die Basis (15) des Kupplungsabschnitts (11) wenigstens ein Hohlprofil, insbesondere ein Rechteckrohr (21), umfasst.

14. Transportfahrzeug für Schneidwerke von Erntemaschinen mit einem Fahrwerk, einem Tragrahmen und einer Verriegelungsvorrichtung (13) zum Verriegeln eines zu transportierenden Schneidwerks gegenüber dem Tragrahmen,
**dadurch gekennzeichnet, dass**
die Verriegelungsvorrichtung (13) nach einem der vorstehenden Ansprüche ausgebildet ist.

15. Transportfahrzeug nach Anspruch 14,
**dadurch gekennzeichnet, dass**
das Transportfahrzeug als Anhänger ausgebildet ist.

## Claims

1. A locking apparatus (13) for locking a cutting unit for a harvester, said cutting unit to be transported on a transport vehicle, with respect to a support frame of the transport vehicle, said locking apparatus (13) comprising a coupling section (11) at the cutting unit side, for example, and a receiver (35) for the coupling section (11) at the vehicle side, for example, which coupling section (11) and receiver (35) can be brought into a locking engagement with one another,
**characterized in that**
the coupling section (11) comprises a base (15), a shaft (17) extending from the base (15) and a head (19) projecting with respect to the shaft (17); and **in that**
the receiver (35) has an abutment surface (31) for the base (15) of the coupling section (11) and an opening (42) for leading through at least the head (19) of the coupling section (11) in a leadthrough direction (E), with a latch element (60) being provided at the receiver (35), which latch element (60) is movable between a release position and a latched position and is configured to engage behind the head (19) of the coupling section (11) led through the opening (42) in the latched position.

2. An apparatus in accordance with claim 1,
**characterized in that**
the latch element (60) is pivotably supported between the release position and the latched position at a base section (37) of the receiver (35), preferably about a pivot axis (S) extending in parallel with the leadthrough direction (E).

3. An apparatus in accordance with claim 1 or claim 2,
**characterized in that**
the latch element (60) has an elongate cut-out (61) which is open at a longitudinal end and whose oppositely disposed boundary margins engage behind the head (19) of the coupling section (11) at two sides when the latch element (60) is in the latched position.

4. An apparatus in accordance with any one of the preceding claims,
**characterized in that**
the latch element (60) has an areal basic shape, with a tongue-like extension (63) of the areal latch element (60) in particular forming a handle section for actuating the latch element (60).

5. An apparatus in accordance with any one of the preceding claims,
**characterized in that**
the head (19) of the coupling section (11) is at least substantially spherical.

6. An apparatus in accordance with any one of the preceding claims,
**characterized in that**
the shaft (17) of the coupling section (11) is at least substantially cylindrical.

7. An apparatus in accordance with any one of the preceding claims,
**characterized in that**
the receiver (35) has two abutment surfaces (41) which are inclined with respect to one another and which are configured for a contact of counter-surfaces (31) of the base (15) of the coupling section (11) which are correspondingly inclined with respect to one another, with the abutment surfaces (41) inclined with respect to one another in particular being arranged in the manner of an arrow with respect to the leadthrough direction (E).

8. An apparatus in accordance with any one of the preceding claims,
**characterized in that**
the latch element (60) can be locked in the release position and/or in the latched position, in particular by means of an adjustable locking pin (65).

9. An apparatus in accordance with any one of the preceding claims,
**characterized in that**
the coupling section (11) or the receiver (35) is configured for a releasable fastening to the cutting unit.

10. An apparatus in accordance with any one of the preceding claims,
**characterized in that**
the coupling section (11) forms a locking component at the cutting unit side and the receiver (35) forms a locking component of the apparatus at the vehicle side.

11. An apparatus in accordance with any one of the preceding claims,
**characterized in that**
a support (45) for the coupling section (11) and/or for at least one further section of the cutting unit is arranged at the receiver (35), with the support (45) in particular being inclined at least regionally with respect to the horizontal in an assembled state of the locking apparatus (13).

12. An apparatus in accordance with claim 11,
**characterized in that**
the base (15) of the coupling section (11) has a counter-surface (78) configured for placement on the support (45).

13. An apparatus in accordance with any one of the preceding claims,
**characterized in that**
the base (15) of the coupling section (11) comprises at least one hollow section, in particular a rectangular tube (21).

14. A transport vehicle for cutting units of harvesters comprising a chassis; a support frame; and a locking apparatus (13) for locking a cutting unit to be transported with respect to the support frame,
**characterized in that**
the locking apparatus (13) is configured in accordance with any one of the preceding claims.

15. A transport vehicle in accordance with claim 14,
**characterized in that**
the transport vehicle is configured as a trailer.

## Revendications

1. Dispositif de verrouillage (13) pour verrouiller un mécanisme de coupe, à transporter sur un véhicule de transport et destiné à une machine de récolte, par rapport à un châssis porteur du véhicule de transport, comportant une portion d'attelage (11) disposée par exemple du côté mécanisme de coupe et un logement (35) pour la portion d'attelage (11) disposé par exemple du côté véhicule, qui peuvent être amenés en engagement de verrouillage l'un avec l'autre,
**caractérisé en ce que**
la portion d'attelage (11) comprend une base (15), une tige (17) s'étendant à partir de la base (15), et une tête (19) en saillie par rapport à la tige (17), et **en ce que**
le logement (35) présente une surface de butée (31) pour la base (15) de la portion d'attelage (11) et une ouverture (42) pour faire passer au moins la tête (19) de la portion d'attelage (11) dans une direction de passage (E), un élément de verrouillage (60) étant prévu au niveau du logement (35), qui est mobile entre une position déverrouillée et une position verrouillée et qui est réalisé pour engager par l'arrière la tête (19) de la portion d'attelage (11) passée à travers l'ouverture (42), dans la position verrouillée.

2. Dispositif selon la revendication 1,
**caractérisé en ce que**
l'élément de verrouillage (60) est monté sur une portion de base (37) du logement (35) de manière à pouvoir pivoter entre la position déverrouillée et la position verrouillée, de préférence autour d'un axe de pivotement (S) s'étendant parallèlement à la direction de passage (E).

3. Dispositif selon la revendication 1 ou 2,
**caractérisé en ce que**
l'élément de verrouillage (60) présente une échancrure (61) allongée et ouverte à une extrémité longitudinale, dont les bords de délimitation opposés engagent par l'arrière de part et d'autre la tête (19) de la portion d'attelage (11) lorsque l'élément de verrouillage (60) se trouve dans la position verrouillée.

4. Dispositif selon l'une des revendications précédentes,
**caractérisé en ce que**
l'élément de verrouillage (60) présente une forme générale surfacique, et en particulier un élargissement (63) en forme de languette de l'élément de verrouillage surfacique (60) constitue une portion de poignée pour actionner l'élément de verrouillage (60).

5. Dispositif selon l'une des revendications précédentes,
**caractérisé en ce que**
la tête (19) de la portion d'attelage (11) est au moins sensiblement de forme sphérique.

6. Dispositif selon l'une des revendications précédentes,
**caractérisé en ce que**
la tige (17) de la portion d'attelage (11) est au moins sensiblement cylindrique.

7. Dispositif selon l'une des revendications précédentes,
**caractérisé en ce que**
le logement (35) présente deux surfaces de butée (41) inclinées l'une par rapport à l'autre et réalisées pour un appui de contre-surfaces (31) inclinées en correspondance l'une par rapport à l'autre de la base (15) de la portion d'attelage (11), et en particulier les surfaces de butée (41) inclinées l'une par rapport à l'autre sont agencées en forme de flèche par rapport à la direction de passage (E).

8. Dispositif selon l'une des revendications précédentes,
**caractérisé en ce que**
l'élément de verrouillage (60) est susceptible d'être arrêté dans la position déverrouillée et/ou dans la position verrouillée, en particulier à l'aide d'un goujon d'arrêt réglable (65).

9. Dispositif selon l'une des revendications précédentes,
**caractérisé en ce que**
la portion d'attelage (11) ou le logement (35) est réalisé(e) pour une fixation détachable au mécanisme de coupe.

10. Dispositif selon l'une des revendications précédentes,
**caractérisé en ce que**
la portion d'attelage (11) constitue un composant de verrouillage côté mécanisme de coupe, et le logement (35) constitue un composant de verrouillage côté véhicule.

11. Dispositif selon l'une des revendications précédentes,
**caractérisé en ce que**
un support (45) pour la portion d'attelage (11) et/ou pour au moins une autre portion du mécanisme de coupe est agencé au niveau du logement (35), et en particulier, dans l'état monté du dispositif de verrouillage (13), le support (45) est incliné au moins localement par rapport à l'horizontale.

12. Dispositif selon la revendication 11,
**caractérisé en ce que**
la base (15) de la portion d'attelage (11) présente une contre-surface (78) réalisée pour s'appuyer sur le support (45).

13. Dispositif selon l'une des revendications précédentes,
**caractérisé en ce que**
la base (15) de la portion d'attelage (11) comprend au moins un profilé creux, en particulier un tube rectangulaire (21).

14. Véhicule de transport pour mécanismes de coupe de machines de récolte comportant un train de roulement, un châssis porteur et un dispositif de verrouillage (13) pour verrouiller par rapport au châssis porteur un mécanisme de coupe à transporter,
**caractérisé en ce que**
le dispositif de verrouillage (13) est réalisé selon l'une des revendications précédentes.

15. Véhicule de transport selon la revendication 14,
**caractérisé en ce que**
le véhicule de transport est réalisé sous forme de remorque.
